# EUROPEAN PATENT SPECIFICATION

(11) **EP 2 167 578 B1**
(45) Date of publication and mention of the grant of the patent: **08.02.2012**
(21) Application number: 08784549.1
(22) Date of filing: 26.06.2008
(51) Int. Cl.: C08L 23/06, C08L 23/08

(54) **PE MOLDING COMPOSITION FOR BLOW-MOLDING OF SMALL LOW-DENSITY BLOW MOLDINGS**
PE-FORMUNGSZUSAMMENSETZUNG FÜR BLASFORMEN VON KLEINEN BLASFORMTEILEN MIT GERINGER DICHTE
COMPOSITION DE MOULAGE PE POUR MOULAGE PAR SOUFFLAGE DE PETITS OBJETS MOULÉS PAR SOUFFLAGE DE FAIBLE DENSITÉ

(30) Priority: 05.07.2007 DE 102007031449; 03.08.2007 US 963365 P
(43) Date of publication of application: 31.03.2010
(73) Proprietor: Basell Polyolefine GmbH, 50389 Wesseling (DE)
(72) Inventor: BERTHOLD, Joachim, 83224 Grassau (DE); BOOS, Diana, 55116 Mainz (DE); MEIER, Gerhardus, 60320 Frankfurt am Main (DE)
(86) International application number: PCT/EP2008/005177
(87) International publication number: WO 2009/003627

(56) References cited:
- WO-A-2004/058877
- WO-A-2006/053740
- WO-A-2006/053741
- WO-A-2006/092378
- WO-A-2007/003530
- WO-A-2007/022908
- DE-A1- 10 325 483
- US-B1- 6 713 561

## Description

The present invention relates to a polyethylene molding composition with polymodal molar mass distribution which is particularly suitable for blow molding of small low-density blow moldings whose capacity is in the range from 250 to 5000 ml, and to a process for production of this molding composition in the presence of a catalytic system composed of Ziegler catalyst and cocatalyst, by way of a multistage reaction sequence composed of successive liquid-phase polymerization reactions. The invention further relates to small blow moldings produced via blow moiding from the molding composition.

Polyethylene is widely used for production of moldings of all types where these require a material with particularly high mechanical strength, high corrosion resistance, and absolutely dependable long-term stability. A further particular advantage of polyethylene is that it also has good chemical resistance and low weight.

EP-A-603 935 has described a molding composition based on polyethylene and having bimodal molar mass distribution and having suitability for production of moldings with good mechanical properties.

US patent 5,338,589 describes a material which has even broader molar mass distribution and which is prepared with a high-activity catalyst that is disclosed in WO 91/18934 and that uses magnesium alcoholate in the form of a gel-like suspension. Surprisingly, it has been found that the use of this material in moldings, in particular in pipes, can give a simultaneous improvement firstly in the properties of stiffness and susceptibility to creep, these usually being inversely correlated in semicrystalline thermoplastics, and secondly in stress-cracking resistance and toughness.

However, a particular feature of the known bimodal products is relatively low melt strength during processing, and this is very important especially for blow-molding processes and injection-molding processes. The low melt strength is a constant cause of movement of the melt during hardening and therefore of unacceptable irregularities in wall thicknesses and process instability.

WO 2004/056921 describes a PE molding composition which features particularly good processability to give small blow moldings in the blow-molding process. Its trimodal molar mass distribution gives it adequately high melt strength and simultaneously a low swelling ratio, which permits ideal control of the wall thicknesses of the small blow moldings in the blow-molding process. However, the disadvantage of the known trimodal PE molding composition remains its relatively high density and its mechanical strength, which continues to be unsatisfactory, and which is expressed in terms of its FNCT stress-cracking resistance.

It was therefore an object of the present invention to develop a polyethylene molding composition which permits, when compared with the prior art, at least equally good processing to give high-quality small blow moldings by the blow-molding process. However, the feature of the novel molding composition is to be its relatively low density, but despite this low density it is intended to be capable of giving improved mechanical strength of small blow moldings, expressed in terms of FNCT stress-cracking resistance, together with a good speck value.

This object is achieved via a molding composition of the generic type mentioned in the introduction, its characterizing features being that it comprises from 45 to 50% by weight of a first, low-molecular-weight ethylene homopolymer A, from 30 to 35% by weight of a second, high-molecular-weight copolymer B composed of ethylene and of another olefin having from 4 to 8 carbon atoms, and from 18 to 23% by weight of a third, ultrahigh-molecular-weight ethylene copolymer C, where all of the percentage data are based on the total weight of the molding composition. It is to be noted that the terms low-molecular weight LMW, high-molecular weight HMW and ultra-high molecular weight UHMW, are not meant to be absolute terms but in the context of the present invention, are only meant to be comparative terms positioning the at least three polymer fractions of the polymer of the present invention relative to each other, and in the order of increasing weight-average molecular weight. Weight distribution and weight average molecular weight can be determined according to ASTM D6474-1999 (2006), using as concentration detector a PolymerChar (Valencia, Paterna 46980, Spain) IR-4 infrared detector. By definition, the LMW, HMW and UHMW polymer fractions are different polymeric constituents. The polymer of the present invention accordingly is, as is implicitely expressed by the three different polymeric constituents already, an at least trimodal or multimodal polymer. Its modality may be further increased by adding further polymeric constituents to said basic three basic polymer fractions or polymer constituents characteristic of the present invention.

The expression of "modality of polymer" refers to the form of its molecular weight distribution (MWD) curve, i.e. the appearance of the graph of the polymer weight fractin as a function of its molecular weight. If the polymer is produced in a sequential process e.g. by utilizing reactiors coupled in series and using different conditions in each reactor, the different polymer fractions produced in the different reactions will each have their own molecular weight distribution which may considerably differ from one another. A polymer showing such a molecular weight distribution curve is 'multimodal': The molecular weight distribution curve of the resulting final polymer can be looked at as the superposition of the molecular weight distribution curves of the polymer fractions which will accordingly show three or more distinct maxima in the present case or will at least be distinctly broadened compared with the individual curves for the individual fractions.

The invention moreover also provides a process for production of this molding composition by cascaded suspension polymerization, and provides small blow moldings whose capacity is in the range from 250 to 5000 ml composed of this molding composition, with quite outstanding mechanical strength properties.

The invention also provides the use of a polyethylene molding composition for production of small blow moldings whose capacity is in the range from 250 to 5000 ml, where the polyethylene molding composition is first plastified in an extruder at temperatures in the range from 180 to 250°C and then is extruded through a die into a blow mold, where it is cooled.

The density of the inventive polyethylene molding composition at a temperature of 23°C is in the range from 0.948 to 0.952 g/cm³, and it has broad, at least trimodal and preferably just trimodal molar mass distribution. The second high-molecular-weight copolymer B comprises relatively high proportions of further olefin monomer units having from 4 to 8 carbon atoms, namely from 1.8 to 2.2% by weight. Examples of these comonomers are 1-butene, 1-pentene, 1-hexene, 1-octene, 4-methyl-1-pentene. The third ultrahigh-molecular-weight ethylene homo- or copolymer C likewise comprises an amount in the range from 4.5 to 5.5% by weight of one or more of the abovementioned comonomers.

The melt flow index to ISO 1133 of the inventive molding composition is moreover in the range from 0.8 to 1.5 g/10 min, expressed in terms of MFR_{190/5}, and its viscosity number VNₜₒₜ is in the range from 270 to 320 cm³/g, in particular from 280 to 310 cm³/g, measured to ISO/R 1191 in decalin at a temperature of 135°C.

The viscosity numbers VN to ISO/R 1191 of the polymers formed in the successive polymerization stages can be used to describe the trimodality, this being a measure of the position of the centers of gravity of the three individual molar mass distributions. The required ranges here for the polymers formed in the individual reaction stages are as follows:

The viscosity number VN₁ measured on the polymer after the first polymerization stage is identical with the viscosity number VN_{A} of the low-molecular-weight polyethylene A and according to the invention is in the range from 70 to 90 cm³/g.

The viscosity number VN₂ measured on the polymer after the second polymerization stage is not equal to VN_{B} (which can only be determined by calculation) of the higher-molecular-weight polyethylene B formed in the second polymerization stage, but is the viscosity number of the mixture composed of polymer A plus polymer B. According to the invention, VN₂ is in the range from 170 to 200 cm³/g.

The viscosity number VN₃ measured on the polymer after the third polymerization stage is not equal to VN_{C} (which likewise can only be determined by calculation) of the ultrahigh-molecular-weight copolymer C formed in the third polymerization stage, but is the viscosity number of the mixture composed of polymer A, polymer B plus polymer C. According to the invention, VN₃ is in the range from 280 to 330 cm³/g, in particular from 290 to 320 cm³/g.

The polyethylene is obtained via polymerization of the monomers in suspension at temperatures in the range from 20 to 120°C, preferably from 70 to 90°C, at a pressure in the range from 2 to 10 bar, and in the presence of a high-activity Ziegler catalyst which is composed of a transition metal compound and of an organoaluminum compound. The polymerization reaction is carried out in three stages, i.e. in three stages in series, where the molar mass is in each case regulated with the aid of hydrogen feed.

The inventive polyethylene molding composition can also comprise, alongside the polyethylene, further additives. Examples of these additives are heat stabilizers, antioxidants, UV absorbers, light stabilizers, metal deactivators, compounds that destroy peroxide, and basic costabilizers, in amounts of from 0 to 10% by weight, preferably from 0 to 5% by weight, and also fillers, reinforcing agents, plasticizers, lubricants, emulsifiers, pigments, optical brighteners, flame retardants, antistatic agents, blowing agents, or a combination of these, in total amounts of from 0 to 50% by weight, based on the total weight of the mixture.

The inventive molding composition has particularly good suitability for production of small blow moldings in the blow-molding process, by first plastifying the polyethylene molding composition in an extruder at temperatures in the range from 180 to 250°C and then extruding it through a die into a blow mold, where it is cooled.

The inventive molding composition can be processed particularly effectively by the blow-molding process to give small blow moldings, because its swelling ratio is in the range from 150 to 160%; the small blow moldings produced therewith have particularly high mechanical strength, because the inventive molding composition has surprisingly high stress-cracking resistance (FNCT, measured under a load of 4 MPa and at a temperature of 80°C) in the range from 20 to 50 h.

The stress-cracking resistance of the inventive molding composition is determined by an internal test method and is stated in h. This laboratory method is described by M. Fleißner in Kunststoffe 77 (1987), pp. 45 et seq., and corresponds to the ISO/CD 16770 standard which has now entered into force. The publication shows that there is a relationship between determination of slow crack growth in the creep test on specimens with peripheral notching and the brittle section of the long-term internal- and hydrostatic- pressure test to ISO 1167. In ethylene glycol as stress-crack-promoting solvent at 80°C with tensile stress of 4 MPa, time to failure is shortened because the crack-initiation time is shortened by the notch (1.6 mm/razor blade). The specimens are produced by sawing three specimens of dimensions 10 x 10 x 90 mm out of a pressed plaque of thickness 10 mm. These specimens are provided with a central notch, using a razor blade in a notching device specifically manufactured for the purpose (see Figure 5 in the publication). Notch depth is 1.6 mm.

The speck value is determined by an internal comparative method. In this, blow molding is used to mold open-top cylindrical test specimens whose internal volume is about 200 ml, whose diameter is 6 cm, and whose wall thickness is 0.5 mm. The test specimens are then vertically cut open, i.e. parallel to their longitudinal axis, and viewed from the inside toward the outside against the light from a bright incandescent bulb of about 150 watt ratting. The number of specks visible to the naked eye in the wall area of about 60 cm² is counted. The score-grade system is used for evaluation, grade 1 being awarded for at most five visible specks, grade 2 for from 6 to 12 visible specks, grade 3 for from 13 to 20, and grade 6 for more than 50 visible specks.

### Example 1 (= inventive)

Ethylene was polymerized in a continuous process in three reactors arranged in series. An amount of 8 mmol/h of a Ziegler catalyst which had been prepared exactly in accordance with the specification of WO 91/18934, example 2 set forth in the experimental section in said WO on devising the catalyst having the operational label number 2.2, was fed into the first reactor, together with a sufficient amount of suspension medium (hexane), ethylene, and hydrogen. The amount of ethylene (= 52.8 kg/h) and the amount of hydrogen (= 48 g/h) were adjusted so that the percentage proportion measured in the gas space of the first reactor was from 22 to 25% by volume of ethylene and 62.6% by volume of hydrogen, the remainder being a mixture composed of nitrogen and of vaporized suspension medium.

The polymerization reaction in the first reactor was carried out at a temperature of 84°C.

The suspension from the first reactor was then transferred to a second reactor in which the percentage proportion of hydrogen in the gas space had been reduced to from 11 to 12% by volume, and into which an amount of 1140 g/h of 1-butene were also added, aiongside an amount of 35.2 kg/h of ethylene. The amount of hydrogen was reduced by way of intermediate H₂ depressurization. 65% by volume of ethylene, 11.5% by volume of hydrogen, and 2.5% by volume of 1-butene were measured in the gas space of the second reactor, the remainder being a mixture composed of nitrogen and of vaporized suspension medium.

The polymerization reaction in the second reactor was carried out at a temperature of 84°C.

The suspension from the second reactor was transferred into the third reactor by way of further intermediate H₂ depressurization, by which the amount of hydrogen in the gas space in the third reactor was adjusted to 0.75% by volume.

An amount of 1080 g/h of 1-butene was also added to the third reactor, alongside an amount of 22 kg/h of ethylene. A percentage proportion of 73% by volume of ethylene, a percentage proportion of 0.75% by volume of hydrogen, and a percentage proportion of 8.4% by volume of 1-butene were measured in the gas space of the third reactor, the remainder being a mixture composed of nitrogen and of vaporized suspension medium.

The polymerization temperature in the third reactor was 84°C.

The cascaded mode of operation described above required long-term activity of the polymerization catalyst, and this was ensured by using a specifically developed Ziegler catalyst whose composition was as stated in the WO mentioned in the introduction. A measure of the usefulness of this catalyst is its extremely high hydrogen utilization factor and its high activity, remaining constant over a long period of from 1 to 8 h.

The polymer suspension discharged from the third reactor is pelletized after removal of the suspension medium and drying of the powder. The material is pelletized in a KOBE LCM 80 extruder with 174 kg/h throughput at a rotation rate of 450 rpm and at a melt temperature of 279°C.

The viscosity numbers and quantitative proportions W_{A}, W_{B}, and W_{C} of polymer A, B and C for the polyethylene molding composition prepared according to example 1 are stated in table 1 below, divided into properties of the polymer powder and of the pellets.

**Table 1**

| Example 1 | Polymer powder | Pellets |
|---|---|---|
| W_{A} [% by wt.] | 48 | |
| W_{B} [% by wt.] | 32 | |
| W_{C} [% by wt.] | 20 | |
| VN₁ [cm³/g] | 78 | |
| VN₂ [cm³/g] | 185 | |
| VNₜₒₜ [cm³/g] | 300 | 293 |
| SR | | 151% |
| FNCT | | 46 h |
| MFR₅ | | 1.1 g/10 min |
| Density | | 0.950 g/cm³ |
| Speck value | | 2-3 |

Key to abbreviations for physical properties in table 1:
- SR (= swelling ratio) measured in [%] in a high-pressure capillary rheometer at a shear rate of 1440 1/s in a 2/2 round-perforation die with conical inlet (angle = 15°) at a temperature of 190°C.
- FNCT = stress-cracking resistance (Full Notch Creep Test) measured by the internal test method of M. Fleißner, load = 4 MPa, temperature = 80°C, in [h].

### Example 2 (= comparative example)

Exactly as in example 1, ethylene was polymerized in a continuous process in three reactors arranged in series. An amount of 8 mmol/h of a Ziegler catalyst which had been prepared in accordance with the specification in WO 91/18934, example 2, and whose operations number in the WO is 2.2, was fed into the first reactor, together with a sufficient amount of suspension medium (hexane), ethylene, and hydrogen. The amount of ethylene (= 52.8 kg/h) and the amount of hydrogen (= 49.5 g/h) were adjusted so that the percentage proportion measured in the gas space of the first reactor was from 25 to 26% by volume of ethylene and 64% by volume of hydrogen, the remainder being a mixture composed of nitrogen and of vaporized suspension medium.

The polymerization reaction in the first reactor was carried out at a temperature of 84°C.

The suspension from the first reactor was then transferred to a second reactor in which the percentage proportion of hydrogen in the gas space had been reduced to 18% by volume, and into which an amount of 300 g/h of 1-butene were also added, alongside an amount of 43.2 kg/h of ethylene. The amount of hydrogen was reduced by way of intermediate H₂ depressurization. 65% by volume of ethylene, 18.5% by volume of hydrogen, and 1.5% by volume of 1-butene were measured in the gas space of the second reactor, the remainder being a mixture composed of nitrogen and of vaporized suspension medium.

The polymerization reaction in the second reactor was carried out at a temperature of 84°C.

The suspension from the second reactor was transferred into the third reactor by way of further intermediate H₂ depressurization, by which the amount of hydrogen in the gas space in the third reactor was adjusted to 1.1 % by volume.

An amount of 1620 g/h of 1-butene was also added to the third reactor, alongside an amount of 24 kg/h of ethylene. A percentage proportion of 78% by volume of ethylene, a percentage proportion of 1.1 % by volume of hydrogen, and a percentage proportion of 5.8% by volume of 1-butene were measured in the gas space of the third reactor, the remainder being a mixture composed of nitrogen and of vaporized suspension medium.

The polymerization temperature in the third reactor was 84°C.

The cascaded mode of operation described above required long-term activity of the polymerization catalyst, and this was ensured by using a specifically developed Ziegler catalyst whose composition was as stated in the WO mentioned in the introduction. A measure of the usefulness of this catalyst is its extremely high hydrogen utilization factor and its high activity, remaining constant over a long period of from 1 to 8 h.

The polymer suspension discharged from the third reactor is pelletized, after removal of the suspension medium and drying of the powder, under conditions identical with those of example 1.

Viscosity numbers and quantitative proportions W_{A}, W_{B}, and W_{C} of polymer A, B, and C in powder form were obtained for the polyethylene molding composition prepared in example 2 and are stated in table 2 below. The physical properties of the pellets were markedly different from those of the pellets from example 1 and appear in the lower part of table 2.

**Table 2**

| Example 2 | Polymer powder | Pellets |
|---|---|---|
| W_{A} [% by wt.] | 44 | |
| W_{B} [% by wt.] | 36 | |
| W_{C} [% by wt.] | 20 | |
| VN₁ [cm³/g] | 79 | |
| VN₂ [cm³/g] | 169 | |
| VNₜₒₜ [cm³/g] | 295 | 290 |
| SR | | 182% |
| FNCT | | 15 h |
| MFR₅ | | 1.25 g/10 min |
| Density | | 0.953 g/cm³ |
| Speck value | | 6 |

The meanings of the abbreviations for physical properties in table 2 are the same as in table 1.

By virtue of the comparative example, it is clear to the person skilled in the art that a deviation which at first glance is to be insubstantial in the percentage by weight distribution between the polymer of the first and the polymer of the second reaction stage immediately reduces mechanical strength (FNCT) in the comparative example in the direction of the low value of the prior art, although the amount in the third polymerization stage is kept constant. Simultaneously with this, the swelling ratio rises to an excessive value above 180%, and this leads to quite considerable technical problems in the processing of the molding composition on conventional blow-molding machines. This shows that the inventors have, by virtue of particularly complicated and painstaking series of experiments, found a selection range for the percentage-by-weight distribution of the individual polymer fractions, and for the distribution of comonomer within the individual fractions, which leads in an entirely surprising manner to particularly high strength together with a good speck value.

## Claims

1. A polyethylene molding composition for blow moulding to give small blow moldings with polymodal molar mass distribution whose density at a temperature of 23°C is in the range from 0.948 to 0.952 g/cm³ and whose MFR_{190/5} is in the range from 0.8 to 1.3 g/10 min ISO 1133 whose viscosity number VNₜₒₜ is in the range from 270 to 320 cm³/g, measured to ISO/R 1191 in decalin at a temperature of 135°C and which comprises from 45 to 50% by weight of a first, low-molecular-weight ethylene homopolymer A, from 30 to 35% by weight of a second, high-molecular-weight Copolymer B composed of ethylene and of another olefin having from 4 to 8 carbon atoms, and from 18 to 23% by weight of a third, ultrahigh-molecular-weight ethylene copolymer C, where all of the percentage data are based on the total weight of the molding composition obtainable from polymerization reaction carried out in three stages, and wherein, in a first polymerization stage, the hydrogen concentration is adjusted so that the viscosity number VN₁ of the low-molecular-weight polyethylene A is in the range from 70 to 90 cm³/g, and wherein, in the second polymerization stage, the hydrogen concentration is adjusted so that the viscosity number VN₂ of the mixture composed of polymer A plus polymer B is in the range from 170 to 200 cm³/g, and wherein, in the third polymerization stage, the hydrogen concentration is adjusted so that the viscosity number VN₃ of the mixture composed of polymer A, polymer B plus polymer C is in the range from 290 to 320 cm³/g.

2. The polyethylene molding composition according to claim 1, wherein the second, high-molecular-weight copolymer B comprises proportions of from 1.8 to 2.2% by weight of comonomer having from 4 to 8 carbon atoms, based on the weight of copolymer B, and wherein the third, ultrahigh-molecular-weight ethylene copolymer C comprises an amount in the range from 4.5 to 5.5% by weight of comonomers, based on the weight of copolymer C.

3. The polyethylene molding composition according to claim 1 or 2, which comprises, as comonomer, 1-butene; 1-pentene, 1-hexene, 1-octene, 4-methyl-1-pentene, or a mixture of these.

4. A process for preparation of a polyethylene molding composition according to one or more of claims 1 to 3, by polymerizing the monomers in suspension at temperatures in the range from 20 to 120°C, and at a pressure in the range from 2 to 10 bar, and in the presence of a high-activity Ziegler catalyst, which is composed of a transition metal compound and of an organoaluminum compound, which comprises conducting the polymerization in three stages, where the molar mass of the polyethylene prepared in each stage is in each case regulated with the aid of hydrogen.

5. The use of a polyethylene molding composition according to one or more of claims 1 to 3 for production of small blow moldings whose capacity is in the range from 250 to 5000 ml, where the polyethylene molding composition is first plastified in an extruder at temperatures in the range from 180 to 250°C and then is extruded through a die into a blow mold, where it is cooled.

## Patentansprüche

1. Polyethylen-Formungszusammensetzung zum Blasformen, um kleine Blasformteile mit einer polymodalen Molmassenverteilung zu erhalten, deren Dichte bei einer Temperatur von 23°C im Bereich von 0,948 bis 0,952 g/cm³ liegt und deren MFR_{190/5} im Bereich von 0,8 bis 1,3 g/10 min liegt, ISO 1133 deren Viskositätszahl VN_{ges} im Bereich von 270 bis 320 cm³/g liegt, gemessen nach ISO/R 1191 in Decalin bei einer Temperatur von 135°C, und die von 45 bis 50 Gew.-% eines ersten, niedermolekularen Ethylenhomopolymers A, von 30 bis 35 Gew.-% eines zweiten, hochmolekularen Copolymers B aus Ethylen und einem weiteren Olefin mit 4 bis 8 Kohlenstoffatomen, und von 18 bis 23 Gew.-% eines dritten, ultrahochmolekularen Ethylencopolymers C umfasst, wobei alle Prozentangaben auf das Gesamtgewicht der aus einer in drei Stufen durchgeführten Polymerisationsreaktion erhältlichen Formungszusammensetzung bezogen sind, und wobei in einer ersten Polymerisationsstufe die Wasserstoffkonzentration so eingestellt wird, dass die Viskositätszahl VN₁ des niedermolekularen Polyethylens A im Bereich von 70 bis 90 cm³/g liegt, und wobei in der zweiten Polymerisationsstufe die Wasserstoffkonzentration so eingestellt wird, dass die Viskositätszahl VN₂ der aus Polymer A plus Polymer B bestehenden Mischung im Bereich von 170 bis 200 cm³/g liegt, und wobei in der dritten Polymerisationsstufe die Wasserstoffkonzentration so eingestellt wird, dass die Viskositätszahl VN₃ der aus Polymer A, Polymer B plus Polymer C bestehenden Mischung im Bereich von 290 bis 320 cm³/g liegt.

2. Polyethylen-Formungszusammensetzung nach Anspruch 1, wobei das zweite hochmolekulare Copolymer B Anteile im Bereich von 1,8 bis 2,2 Gew.-% Comonomer mit 4 bis 8 Kohlenstoffatomen umfasst, bezogen auf das Gewicht von Copolymer B, und wobei das dritte ultrahochmolekulare Ethylencopolymer C eine Menge im Bereich von 4,5 bis 5,5 Gew.-% Comonomere umfasst, bezogen auf das Gewicht von Copolymer C.

3. Polyethylen-Formungszusammensetzung nach Anspruch 1 oder 2, die als Comonomer 1-Buten, 1-Penten, 1-Hexen, 1-Octen, 4-Methyl-1-penten oder eine Mischung davon umfasst.

4. Verfahren zur Herstellung einer Polyethylen-Formungszusammensetzung nach einem oder mehreren der Ansprüche 1 bis 3 durch Polymerisation der Monomere in Suspension bei Temperaturen im Bereich von 20 bis 120°C und bei einem Druck im Bereich von 2 bis 10 bar und in Gegenwart eines hochaktiven Ziegler-Katalysators, der aus einer Übergangsmetallverbindung und aus einer aluminiumorganischen Verbindung besteht, wobei die Polymerisation in drei Stufen durchgeführt wird, wo die Molmasse des in jeder Stufe hergestellten Polyethylens in jedem Fall mit Hilfe von Wasserstoff reguliert wird.

5. Verwendung einer Polyethylen-Formungszusammensetzung nach einem oder mehreren der Ansprüche 1 bis 3 zur Herstellung von kleinen Blasformteilen, deren Fassungsvermögen im Bereich von 250 bis 5000 ml liegt, wobei die Polyethylen-Formungszusammensetzung zunächst in einem Extruder bei Temperaturen im Bereich von 180 bis 250°C weichgemacht wird und dann durch eine Düse in eine Blasform extrudiert wird, wo sie abgekühlt wird.

## Revendications

1. Composition de moulage à base de polyéthylène pour le moulage par soufflage pour donner de petits objets moulés par soufflage présentant une distribution de masses molaires polymodale, dont la densité à une température de 23°C est dans la plage de 0,948 à 0,952 g/cm³ et dont le MFR_{190/5} est dans la plage de 0,8 à 1,3 g/10 min, ISO 1133 dont le nombre de viscosité VNₜₒₜ est dans la plage de 270 à 320 cm³/g, mesuré selon la norme ISO/R 1191 dans la décaline à une température de 135°C et qui comprend 45 à 50% en poids d'un premier homopolymère d'éthylène de bas poids moléculaire A, 30 à 35% en poids d'un deuxième copolymère de haut poids moléculaire B composé d'éthylène et d'une autre oléfine contenant 4 à 8 atomes de carbone, et 18 à 23% en poids d'un troisième copolymère d'éthylène d'ultra haut poids moléculaire C, où toutes les données de pourcentage sont basées sur le poids total de la composition de moulage pouvant être obtenue à partir d'une réaction de polymérisation réalisée en trois étages, et où, dans un premier étage de polymérisation, la concentration en hydrogène est ajustée de manière à ce que le nombre de viscosité VN₁ du polyéthylène de bas poids moléculaire A est dans la plage de 70 à 90 cm³/g, et où, dans le deuxième étage de polymérisation, la concentration en hydrogène est ajustée de manière à ce que le nombre de viscosité VN₂ du mélange composé de polymère A plus polymère B est dans la plage de 170 à 200 cm³/g, et où, dans le troisième étage de polymérisation, la concentration en hydrogène est ajustée de manière à ce que le nombre de viscosité VN₃ du mélange composé de polymère A, polymère B plus polymère C est dans la plage de 290 à 320 cm³/g.

2. Composition de moulage à base de polyéthylène selon la revendication 1, où le deuxième copolymère de haut poids moléculaire B comprend des proportions de 1,8 à 2,2% en poids de comonomère contenant 4 à 8 atomes de carbone, sur base du poids du copolymère B, et où le troisième copolymère d'éthylène d'ultra haut poids moléculaire C comprend une quantité dans la plage de 4,5 à 5,5% en poids de comonomères, sur base du poids du copolymère C.

3. Composition de moulage à base de polyéthylène selon la revendication 1 ou 2, qui comprend, comme comonomère, le 1-butène, le 1-pentène, le 1-hexène, le 1-octène, le 4-méthyl-1-pentène ou un mélange de ceux-ci.

4. Procédé pour la préparation d'une composition de moulage à base de polyéthylène selon l'une ou plusieurs des revendications 1 à 3, par polymérisation de monomères en suspension à des températures dans la plage de 20 à 120°C et à une pression dans la plage de 2 à 10 bars et en présence d'un catalyseur de Ziegler à haute activité, qui est composé d'un composé de métal de transition et d'un composé organique de l'aluminium, qui comprend la conduite de la polymérisation en trois étages, où la masse molaire du polyéthylène préparé dans chaque étage est dans chaque cas régulée au moyen d'hydrogène.

5. Utilisation d'une composition de moulage à base de polyéthylène selon l'une ou plusieurs des revendications 1 à 3, pour la production de petits objets moulés par soufflage dont la capacité est dans la plage de 200 à 5000 ml, où la composition de moulage à base de polyéthylène est d'abord plastifiée dans une extrudeuse à des températures dans la plage de 180 à 250°C et est ensuite extrudée à travers une filière dans un moule de soufflage, où elle est refroidie.
